(19) Europäisches Patentamt
European Patent Office
Office européen des brevets

(11) Veröffentlichungsnummer: **0 201 831**
**A2**

# (12) EUROPÄISCHE PATENTANMELDUNG

(21) Anmeldenummer: **86106117.4**

(22) Anmeldetag: **05.05.86**

(51) Int. Cl.⁴: **C08G 63/18**, C08J 5/00

(30) Priorität: **14.05.85 DE 3517270**

(43) Veröffentlichungstag der Anmeldung:
**20.11.86 Patentblatt 86/47**

(84) Benannte Vertragsstaaten:
**DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Dicke, Hans-Rudolf, Dr.**
**Bodelschwinghstrasse 16**
**D-4150 Krefeld(DE)**
Erfinder: **Bottenbruch, Ludwig, Dr.**
**Wöhler Strasse 5**
**D-4150 Krefeld(DE)**
Erfinder: **Wedemeyer, Karlfried, Dr.**
**Bilharzstrasse 7**
**D-5000 Koeln 80(DE)**
Erfinder: **Paetz, Klaus-Christian, Dr.**
**Rosenkranz 23**
**D-5093 Burscheid(DE)**
Erfinder: **El Sayed, Aziz, Dr.**
**Saarlauternerstrasse 39**
**D-5090 Leverkusen(DE)**

## (54) Thermotrope aromatische Polyester mit hoher Wärmeformbeständigkeit, Verfahren zu ihrer Herstellung und ihre Verwendung zur Herstellung von Formkörpern, Filamenten, Fasern und Folien.

(57) Thermotrope aromatische Polyester, die als Diphenolreste 3,3'-Diphenyl-4,4'-dihydroxydiphenyl-reste enthalten, lassen sich trotz hoher Wärmeformbeständigkeit ohne Zersetzung thermoplastisch verarbeiten.

EP 0 201 831 A2

# Thermotrope aromatische Polyester mit hoher Wärmeformbeständigkeit, Verfahren zu ihrer Herstellung und ihre Verwendung zur Herstellung von Formkörpern, Filamenten, Fasern und Folien

Die Erfindung betrifft hochmolekulare thermotrope aromatische Polyester mit hoher Wärmeformbeständigkeit sowie hoher thermischer und chemischer Stabilität, ein Verfahren zur Herstellung dieser Polyester sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind hinreichend bekannt, vergleiche z.B.

F.E. McFarlane et al., Liquid Crystal Polymers II, Contemporary Topics in Polymer Science, Vol. 2, Plenum Publishing Corporation, 1977;

W. J. Jackson und H.F. Kuhfuss, J. Polymer Science, Polymer Chem. Ed. 14, 2042 (1976);

W.E. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, 1-19 (1982);

A. Ciferri, W.R. Krigbaum, R.B. Meyer, "Polymer Liquid Crystals", Academic Press, New York, 1982;

EP-A 1185, 8855, 15 856, 17 310, 18 145, 22 344, 44 205, 49 615;

US-PS 3 991 013, 3 991 014, 4 066 620, 4 083 829, 4 107 134;

WO 79/797, 79/1030, 79/1040.

Der flüssigkristalline Zustand von Polyesterschmelzen läßt sich mit Hilfe eines Polarisationsmikroskops untersuchen: für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polyesterschmelzen betrug 100 µm.

Die Untersuchung der Polyester erfolgte nach dem Aufschmelzen der Proben bei Temperaturen zwischen 300 und 430°C. Sofern in diesem gesamten Bereich oder in einem Teil davon eine Aufhellung der zwischen den gekreuzten Nicolschen Prismen beobachteten Schmelze auftrat, wurde der Polyester als thermotrop flüssigkristallin eingestuft.

Die flüssigkristallinen Polyester zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto, 1974 beschrieben ist.

Aus thermotropen Polyestern lassen sich durch thermoplastische Verformung Formkörper und Folien sowie durch Verspinnen aus der Schmelze Filamente und Fasern mit außergewöhnlichen mechanischen Eigenschaften herstellen. Voraussetzung ist jedoch, daß die Polyester unzersetzt schmelzbar sind.

Die einfachsten voll-aromatischen Polyester, wie z.B. Poly(4-hydroxybenzoat) und Poly-(1,4-phenylenterephthalat) erfüllen diese Voraussetzungen nicht: Sie schmelzen unter Zersetzung erst bei etwa 600°C.

Thermotrope Polyester aus drei oder mehr Monomeren können thermoplastisch verarbeitet werden (DE-OS 27 04 315, 27 21 786, 27 51 653, 28 34 537, 28 44 817, 29 32 178, 29 63 833, EP-A 1340, 30 182, 69 587, US-PS 41 53 779, 42 45 082, 42 79 803, 43 55 134, 43 71 660, 43 91 966). Allen diesen Produkten ist jedoch gemeinsam, daß mit der erwünschten Erniedrigung des Schmelzpunktes auch eine unerwünschte Verminderung der Wärmeformbeständigkeit eintritt. In manchen Fällen läßt sich die Wärmeformbeständigkeit durch eine thermische Nachbehandlung der aus diesen thermotropen Copolyestern hergestellten Filamente, Fasern, Folien oder Formkörper erhöhen. Die thermische Nachbehandlung ist jedoch unwirtschaftlich.

Aufgabe der Erfindung war es, thermotrope aromatische Polyester bereitzustellen, die trotz hoher Wärmeformbeständigkeit thermoplastisch unzersetzt verarbeitet werden können.

Die Wärmeformbeständigkeit (ohne thermische Nachbehandlung) sollte mindestens 200°C, vorzugsweise mindestens 250°C und insebesondere mindestens 300°C (jeweils gemessen nach Vicat A, DIN 53 460, ISO 306) betragen.

Die durch DSC bestimmte Übergangstemperatur von der kristallinen in die flüssigkristalline Phase (Schmelzpunkt) sollte unter 420°C, vorzugsweise unter 400°C liegen.

Ferner sollten die neuen thermotropen Polyester bei Temperaturen oberhalb des Schmelzpunktes ausreichend thermisch stabil sein. Bei isothermer gravimetrischer Analyse (30 min/400°C) sollte ein Gewichtsverlust von 5, vorzugsweise von 3 Gew.-% nicht überschritten werden.

Überraschenderweise wurde gefunden, daß thermotrope Polyester die gewünschte Kombination vorteilhafter Eigenschaften dann besitzen, wenn ihre Diphenolreste überwiegend oder allein aus 3,3'-Diphenyl-4,4'-dihydroxydiphenylresten bestehen.

Gegenstand der Erfindung sind also thermotrope Polyester aus aromatischen Dicarbonsäureresten, Diphenolresten, gegebenenfalls Resten aus Kettenabbrechern und/oder Verzweigungsmitteln, dadurch gekennzeichnet, daß die Diphenolreste zu mindestens 90 Mol-%, vorzugsweise zu mindestens 95 Mol-%, insbesonndere zu mindestens 98 Mol-% 3,3'-Diphenyl-4,4'-dihydroxydiphenylreste sind.

Diese Reste entsprechen der Formel

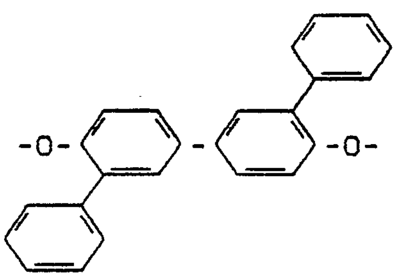

(I)

3,3'-Diphenyl-4,4'-dihydroxy-diphenyl ist bekannt; J.Org. Chem;, Vol. 34, S. 1160 (1960).

Die Diphenolreste besonders bevorzugter Polyester bestehen vollständig aus 3,3'-Diphenyl-4,4'-dihydroxydiphenylresten.

Bevorzugte aromatische Dicarbonsäuren entsprechend der Formel

HOOC-A-COOH ... (II)

worin A einen bivalenten aromatischen Rest mit 8 bis 24 C-Atomen, vorzugsweise mit 8 bis 16 C-Atomen bedeutet. Bevorzugte aromatische Reste A sind solche, bei denen sich die beiden Bindungen zu den Carboxylgruppen koaxial in entgegengesetzte Richtungen erstrecken, wie beispielsweise in 1,4-Phenylen, 1,4-Naphthylen oder 4,4'-Biphenylen, oder bei denen die in entgegengesetzte Richtungen zeigenden Bindungen parallel zueinander verschoben sind, wie beispielsweise in 1,5-Naphthylen, 2,6-Naphthylen oder 3,5'-Biphenylen. Weitere bevorzugte aromatische Dicarbonsäuren sind 4,4'-trans-Stilbendicarbonsäure, 4,4-Tolandicarbonsäure und 4,4'-Azobenzoldicarbonsäuren. Besonders bevorzugt ist Terephthalsäure.

Die erfindungsgemäßen Polyester können Mischungen der oben beschriebenen Dicarbonsäurereste enthalten; bevorzugt sind jedoch solche Polyester, die als Dicarbonsäurereste jeweils nur eine der genannten Komponenten enthalten.

Außer 3,3'-Diphenyl-4,4'-dihydroxydiphenyl-reste können die erfindungsgemäßen Polyester bis zu 10 Mol-%, bezogen auf Diphenolreste, Reste anderer Diphenole mit 6 bis 18 C-Atomen enthalten, wie z.B. Reste von Hydrochinon, Resorcin, Bisphenol-A, 4,4'-Dihydroxydiphenylether, 4,4'-Dihydroxy-diphenylsulfid oder von 4,4'-Dihydroxybenzophenon.

Außer Resten der bevorzugten Dicarbonsäuren II können die erfindungsgemäßen Polyester bis zu 10 Mol-%, bezogen auf Dicarbonsäurereste, Reste anderer aromatischer Dicarbonsäuren mit 8 bis 24 C-Atomen, aliphatischer Dicarbonsäuren mit 4 bis 14 C-Atomen, cycloaliphatischer Dicarbonsäuren mit 8 bis 16 C-Atomen, araliphatischer Dicarbonsäuren mit 10 bis 18 C-Atomen und/oder Hydroxycarbonsäuren mit 7 bis 19 C-Atomen enthalten. Bevorzugte Beispiele derartiger Cosäuren sind

Isophthalsäure, Bernsteinsäure, Adipinsäure, Sebacinsäure, Hexahydrophthalsäure, -iso-und -terephthalsäure, Cyclohexandiessigsäure und p-Hydroxybenzoesäure.

Falls die erfindungsgemäßen Polyester neben den 3,3'-Diphenyl-4,4'-dihydroxydiphenyl-resten andere Diphenolreste und neben Resten der aromatischen Dicarbonsäuren II andere Dicarbonsäurereste enthalten, soll die Summe der Cokomponenten insgesamt 10 Mol-%, bezogen auf die Summe der Diphenol-und Dicarbonsäurereste, nicht übersteigen.

Die erfindungsgemäßen Polyester können bis zu 10 Mol-% Carbonatgruppen, bezogen auf die Summe an Ester-und Carbonatgruppen, enthalten.

Besonders bevorzugt sind Homopolyester aus 3,3'-Diphenyl-4,4'-dihydroxydiphenyl und Terephthalsäure.

Als Endgruppen können die erfindungsgemäßen Polyester -COOH, -OH, $-OC_6H_5$, Acyloxy oder von Kettenabbrechern herrührende Reste enthalten. Bevorzugte Kettenabbrecher sind monofunktionelle aromatische Hydroxylverbindungen wie 4-Hydroxydiphenyl, p-Nonylphenol, 4-(1,1,3,3-Tetramethyl-butyl)-phenol, $\beta$-Naphthol und aromatische Monocarbonsäuren, wie Benzoesäure, Diphenylcarbonsäuren und Naphthalincarbonsäuren. Kettenabbrecher können in Mengen von 0,5-5 Mol, bei Monohydroxylverbindungen bezogen auf Diphenole, bei Monocarbonsäuren bezogen auf Dicarbonsäuren, eingesetzt werden.

Als Verzweigungsmittel können drei-oder höherfunktionelle, vorzugsweise drei-und vierfunktionelle -vorzugsweise aromatische -Monomere, wie z.B. Phloroglucin, 1,3,5-Benzoltricarbonsäure oder 3,5-Dihydroxybenzoesäure, in Mengen von 0,1 bis 1 Mol-%, bei Poly-und Hydroxycarbonsäuren bezogen auf Dicarbonsäuren, bei Polyolen bezogen auf Diphenole, eingesetzt werden.

Die erfindungsgemäßen Polyester sind in den von uns erprobten Lösungsmitteln, wie z.B. p-Chlorphenol und Phenol/Tetrachorethan (1:1 Gewichtsteile), unlöslich.

Die Schmelzviskosität der erfindungsgemäßen Polyester, gemessen jeweils 20°C oberhalb der durch DSC bestimmten Übergangstemperatur von der kristallinen in die flüssigkristalline Phase (üblicherweise zwischen 350 und 430°C) unter Verwendung einer Düse mit einem Länge/Durchmesser-Verhältnis von 20 bei einer Schergeschwindigkeit von $10^3$ $sec^{-1}$ beträgt in der Regel 2 bis 2000, vorzugsweise 5 bis 1000, insbesondere 10 bis 500 Pa.s.

Die erfindungsgemäßen Polyester können durch Umsetzung der Diphenole oder ihrer reaktionsfähigen Derivate, z.B. ihrer $C_1$-$C_3$-Acylderivate, mit den Dicarbonsäuren oder ihren reaktionsfähigen Derivaten, z.B. ihren Dihalogeniden oder Diestern, gegebenenfalls in Gegenwart von Verzweigungsmitteln, Kettenabbrechern und/oder Katalysatoren, nach verschiedenen Verfahren hergestellt werden.

Carbonatgruppen können durch Verwendung von Diphenylcarbonat eingeführt werden.

Die erfindungsgemäßen Polyester können bei Temperaturen von 160°C bis 400°C hergestellt werden, wobei man im allgemeinen die Reaktion bei niedrigen Temperaturen beginnt und im Verlaufe des Reaktionsfortschritts kontinuierlich die Temperatur erhöht. Bei nachlassender Reaktionsgeschwindigkeit kann ein Vakuum angelegt werden, wobei der Druck vorzugsweise von Normaldruck bis auf ca. 0,1 mbar gesenkt wird.

Nach einem bevorzugten Verfahren werden die Diphenoldiacetate, die auch in situ erzeugt werden können, mit den Dicarbonsäuren bei Temperaturen von 160 bis 400°C, gegebenenfalls unter vermindertem Druck, umgesetzt.

Nach einem anderen bevorzugten Verfahren werden die Dicarbonsäurediester mit den Diphenolen bei Temperaturen von 250 bis 400°C und einem Druck von 0,1 bis 1000 mbar umgesetzt.

Das erhaltene Produkt kann einer Festphasennachkondensation -vorzugsweise unter vermindertem Druck -bei einer Temperatur von 220 bis 380°C unterworfen werden. Nach 2 bis 25 Stunden hat sich das Molekulargewicht deutlich erhöht, und damit besitzt der resultierende Polyester weiter verbesserte Eigenschaften.

Die Ausgangsverbindungen werden in der Regel in solchen Mengen eingesetzt, daß Carboxylzu Hydroxylfunktionen in einem Verhältnis von 0,95 bis 1,05, vorzugsweise 0,98 bis 1,02, stehen.

Die Reaktionen können in der Schmelze oder in inerten hochsiedenden Lösungsmitteln durchgeführt werden.

Bevorzugte Katalysatoren für die Polykondensation sind Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, z. B.

Natriumhydroxid, Lithiumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide, wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl-und Diarylzinnoxid, Di-butylzinn-diacetat, Dibutyl-dimethoxy-zinn. Besonders bevorzugt sind Magnesium-, Mangan-, Natrium-, Kalium-und Zinkacetat, Titantetrabutylat, Titantetrapropylat sowie Natriumphenolat. Die Katalysatormengen betragen vorzugsweise 0,001 bis 1 Gew.-%, insbesondere 0,01 bis 0,2 Gew.-%, bezogen auf das Gesamtgewicht der eingesetzten Monomeren.

Die erfindungsgemäßen thermotropen Polyester können infolge ihrer relativ geringen Schmelzviskosität thermoplastisch zu Spritzgußteilen, Filamenten, Fasern, Bändern und Filmen verarbeitet werden. Durch die hierbei auftretenden Scherkräfte wird eine Molekülorientierung erzielt, die in hohem Maße von der Stärke dieser Kräfte beeinflußt wird. Des weiteren zeigen sie eine ausgeprägte Strukturviskosität, d.h. daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, hoher Wärmeformbeständigkeit und großer Dimensionsstabilität hergestellt werden. Da die Polyester außerordentlich chemikalienresistent und flammwidrig sind, eignen sie sich bevorzugt zur Herstellung von:

-elektrotechnischen Artikeln, wie z.B. Isolatoren, gedruckten Schaltungen, Steckkontakten, Armaturenteilen, Umhüllungen von integrierten Schaltungen,

-Teilen chemisch-technischer Apparate, wie z.B. Rohren, Behälterauskleidungen, Rotoren, Gleitlagern, Dichtungen,

-Teilen der Flugzeuginnenausstattung,

-Teilen medizinisch-technischer Geräte, wie z.B. Bauteilen von Klimaanlagen, Ventilteilen.

Die erfindungsgemäßen Polyester können aber auch als Überzugs-und Beschichtungsmaterial - (pulverförmig oder dispergiert) verwendet werden. Auch zur Herstellung verstärkter oder gefüllter Formmassen mit einem Verstärker-bzw. Füllstoffgehalt von 5 bis 65 Gew.-%, bezogen auf verstärkte und gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

Die Prozentangaben der nachfolgenden Beispiele beziehen sich jeweils auf das Gewicht.

Beispiele

Die Messung der Wärmeformbeständigkeit erfolgte durch Bestimmung der Vicat-A-Erweichungstemperatur gemäß DIN 53 460 (ISO 2306).

Beispiel 1

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

95,45 g = 0,3 Mol Terephthalsäurediphenylester,

101,4 g = 0,3 Mol 3,3'-Diphenyl-4,4'-dihydroxydiphenyl und

0,01 g Titantetraisopropylatlösung in Chlorbenzol - (1 %ig).

Unter leichtem Stickstoffstrom wurde die Reaktionsmischung mittels Salzbad auf 280°C aufgeheizt. Im Verlauf einer Stunde wurde die Temperatur auf 300°C erhöht. Phenol destillierte ab. Über einen Zeitraum von 1,5 Stunden wurde durch allmähliche Erhöhung der Temperatur bis auf 350°C weiter Phenol abdestilliert. Die Destillatmenge betrug zu diesem Zeitpunkt 46,8 g (= 83 % der Theorie). Durch Druckerniedrigung bis auf 4 mbar und gleichzeitiger weiterer Erhöhung der Reaktionstemperatur bis auf 380°C wurde die Phenolabspaltung innerhalb von 20 Minuten zu Ende geführt. Am Ende der Reaktion erstarrte das Produkt im Kolben. Nach dem Abkühlen wurde ein beigefarbener Polyester erhalten.

Bei der DSC-Untersuchung (verwendetes Gerät: Perkin Elmer DSC 2, Aufheizgeschwindigkeit: 20 K/min) wurde bei 385°C ein Schmelzpeak (Gesamtschmelzwärme: 8,47 cal/g) beobachtet.

Unter dem Polarisationsmikroskop wurde oberhalb 395°C eine anisotrope Schmelze beobachtet.

Die thermogravimetrische Analyse ergab bei isothermer Messung (30 Minuten/400°C) einen Gewichtsverlust von 1,8 %.

Die Erweichungstemperatur des Polyesters betrug 335°C (Vicat A).

Das Produkt war unlöslich in p-Chlorphenol und Hexafluorisopropanol.

Beispiel 2

In die in Beispiel 1 beschriebene Reaktionsapparatur wurden die folgenden Substanzen eingewogen:

49,84 g = 0,3 Mol Terephthalsäure,

126,6 g = 0,3 Mol 3,3-Diphenyl-4,4'-diacetoxydiphenyl,

je 0,05 % Magnesiumoxid und Antimontrioxid, bezogen auf das Gewicht der gesamten Einwaage.

Unter leichtem Stickstoffstrom wurde die Reaktionsmischung mittels Salzbad auf 270°C aufgeheizt. Nach 20 Minuten bei dieser Temperatur wurde weiter auf 310°C aufgeheizt, wobei Essigsäure überdestillierte. Im weiteren Verlauf der Reaktion wurde die Temperatur 30 Minuten bei 310°C gehalten, dann 45 Minuten bei 330°C und - schließlich 40 Minuten bei 350°C. Vakuum wurde angelegt und gleichzeitig die Temperatur auf 380°C erhöht. Die Reaktion wurde bei dieser Temperatur und einen Druck von 3 mbar noch weitere 20 Minuten fortgeführt. Schließlich erstarrte das Produkt. Nach dem Abkühlen wurde ein hellbrauner Polyester erhalten.

Bei der DSC-Untersuchung wurde bei 380°C ein Schmelzpeak beobachtet (Gesamtschmelzwärme: 9,3 cal/g).

Polarisationsmikroskopisch wurde bei Temperaturen oberhalb 385°C eine anisotrope Schmelzphase beobachtet.

Bei der thermogravimetrischen Analyse - (isotherm 30 Minuten bei 400°C) trat ein Gewichtsverlust von 2,1 % auf.

Die Vicat-A-Temperatur des Polyesters betrug 345°C.

Das Produkt war in allen getesteten Lösungsmitteln unlöslich.

Beispiel 3

In die im Beispiel 1 beschriebene Reaktionsapparatur wurden die folgenden Substanzen eingewogen:

95,45 g = 0,3 Mol Terephthalsäurediphenylester,

96,33 g = 0,285 Mol 3,3'-Diphenyl-4,4'-dihydroxydiphenyl,

1,65 g = 0,015 Mol Hydrochinon und

0,01 g Natriumphenolat.

Nach dem in Beispiel 1 beschriebenen Reaktionsverfahren wurde ein beigefarbenes Produkt erhalten. Der Polyester wies die folgenden Eigenschaften auf:

Schmelztemperatur: 365°C

Anisotrope Schmelzphase: oberhalb 370°C

TGA (30 min/400°C): 1,4 % Gewichtsverlust

Vicat A-Temperatur: 290°C

Beispiel 4 - 12

In der in Beispiel 1 beschriebenen Apparatur und nach dem dort erläuterten Verfahren wurden weitere Polyester hergestellt. Die einzelnen Zusammensetzungen und die Ergebnisse der Charakterisierung sind in den nachfolgenden Tabellen 1 und 2 zusammengestellt:

Le A 23 806

Tabelle 1

| Beispiel | TSDPE* | DPDOD** | Codiol | $T_m$*** | Anisotrope Schmelze | Vicat-A-Temperatur | TGA*** |
|---|---|---|---|---|---|---|---|
| 4 | 0,3 Mol | 0,27 Mol | 0,03 Mol Hy [1] | 355° C | > 360° C | 250° C | 2,1 % |
| 5 | 0,3 Mol | 0,27 Mol | 0,03 Mol BPA [2] | 375° C | > 260° C | 260° C | 1,7 % |
| 6 | 0,3 Mol | 0,27 Mol | 0,03 Mol Res [3] | 350° C | > 350° C | 240° C | 1,9 % |
| 7 | 0,3 Mol | 0,28 Mol | 0,02 Mol Res [3] | 360° C | > 365° C | 270° C | 2,4 % |
| 8 | 0,3 Mol | 0,27 Mol | 0,03 Mol DOD [4] | 375° C | > 380° C | 300° C | 1,1 % |

* = Terephthalsäurediphenylester

** = 3,3'-Diphenyl-4,4'-dihydroxydiphenyl

*** = Schmelzpunkt (ermittelt über DSC)

**** = Gewichtsverlust nach 30 Minuten bei 400° C

1 = Hydrochinon

2 = Bisphenol-A

3 = Resorcin

4 = 4,4'-Dihydroxydiphenyl

Tabelle 2

| Beispiel | DPDOD* | TSDSPE** | Cosäure | $T_m$ *** | Anisotrope Schmelze | Vicat-A-Temperatur | TGA*** |
|---|---|---|---|---|---|---|---|
| 9 | 0,3 Mol | 0,27 Mol | 0,03 Mol IS [1] | 370° C | > 375° C | 310° C | 1,4 % |
| 10 | 0,3 Mol | 0,27 Mol | 0,03 Mol BPCD [2] | 360° C | > 360° C | 295° C | 1,8 % |
| 11 | 0,3 Mol | 0,27 Mol | 0,03 Mol DEDC [3] | 355° C | > 360° C | 305° C | 0,9 % |
| 12 | 0,3 Mol | 0,285 Mol | 0,015 Mol IS [1] | 370° C | > 375° C | 305° C | 1,2 % |

* = 3,3'-Diphenyl-4,4'-dihydroxydiphenyl

** = Terephthalsäurediphenylester

*** = Schmelzpunkt (ermittelt über DSC)

**** = Gewichtsverlust nach 30 min bei 400° C

1 = Isophthalsäurediphenylester

2 = 4,4'-Benzophenondicarbonsäurediphenylester

3 = 4,4'-Diphenyletherdicarbonsäurediphenylester

## Ansprüche

1. Thermotrope Polyester aus aromatischen Dicarbonsäureresten, Diphenolresten, gegebenenfalls Resten von Kettenabbrechern und/oder Verzweigungsmitteln, dadurch gekennzeichnet, daß die Diphenolreste zu mindestens 90 Mol-% 3,3'-Diphenyl-4,4'-dihydroxydiphenylreste sind.

2. Polyester nach Anspruch 1, dadurch gekennzeichnet, daß die Diphenolreste zu mindestens 95 Mol-% 3,3'-Diphenyl-4,4'-dihydroxydiphenyl-reste sind.

3. Polyester nach Anspruch 1, dadurch gekennzeichnet, daß die Diphenolreste zu mindestens 98 Mol-% 3,3-Diphenyl-4,4'-dihydroxydiphenyl-reste sind.

4. Polyester nach Anspruch 1, dadurch gekennzeichnet, daß die Diphenolreste vollständig aus 3,3'-Diphenyl-4,4'-dihydroxydiphenyl-resten bestehen.

5. Polyester nach Ansprüchen 1-4, dadurch gekennzeichnet, daß die aromatischen Dicarbonsäurereste Terephthalsäurereste sind.

6. Verfahren zur Herstellung der Polyester nach Ansprüchen 1-5, dadurch gekennzeichnet, daß man die Diphenoldiacetate mit den Dicarbonsäuren sowie gegebenenfalls Verzweigungsmitteln und gegebenenfalls Kettenabbrechern bei Temperaturen von 160 bis 400°C, gegebenenfalls in Gegenwart von Katalysatoren und gegebenenfalls unter vermindertem Druck, umsetzt.

7. Verfahren zur Herstellung der Polyester nach Ansprüchen 1 bis 5, dadurch gekennzeichnet, daß man die Dicarbonsäurediphenylester mit den Diphenolen bei Temperaturen von 250 bis 400°C und einem Druck von 0,1 bis 1000 mbar umsetzt.

8. Verwendung der Polyester nach Ansprüchen 1 bis 5 zur Herstellung von Formkörpern, Filamenten, Fasern und Filmen.